# EUROPEAN PATENT APPLICATION

(11) **EP 2 479 668 A1**
(43) Date of publication of application: **25.07.2012**
(21) Application number: 11151458.4
(22) Date of filing: 19.01.2011
(51) Int. Cl.: G06F 9/46

(54) **Method for executing applications in a computing device**

(71) Applicant: Advanced Digital Broadcast S.A., 1292 Chambesy (CH)
(72) Inventor: Bristow, Paul, 1292, Pregny-Chambesy (CH); Olejniczak, Marek, 65-119, Zielona Góra (PL)
(74) Representative: Di Bernardo, Antonio

(57) **Abstract**

It is disclosed a method for managing applications in a computing device. When a user saving command, intended for saving information on the current state of a running software application, is received, the running software application is queried in order to receive data necessary to resume the software application in said current state. Data provided by the software application in response to said query are received and then stored in a computer readable medium to keep information on the current state while the software application changes state. Upon reception of a user recall command for executing the application, the stored data are provided to the software application, so that the software application reaches said current state and resumes operation.

A computing device implementing the method is also disclosed.

## Description

### TECHNICAL FIELD

The present invention relates to the field of computer implemented methods and in particular to methods for executing computer programs in user favourite states. The invention finds preferred application in the field of TV sets and set-top-boxes wherein lists of favourites TV channels and bookmarked web pages are provided. In particular, the invention relates to a method according to the preamble of claim 1 and to a computing device adapted to implement this method.

### BACKGROUND ART

In recent years, a plurality of multimedia devices, which are able to display broadcast TV signals and Internet contents, are available on the market.

As an example, Sony® sells a so called internet TV set under the trademark Bravia®. This TV set is provided with a plurality of widgets (sometimes also called gadgets) that retrieve data from the Internet and display them. As an example a user can start the widget of Youtube® and watch at different videos retrieved from the web site www.youtube.com. Widgets retrieve data and display them according to a graphic interface that is defined in the TV set.

US2005/0193053 discloses that set-top-boxes sold under the trademarks MSN TV viewer and DirectTV are provided with web browsers for receiving web pages over the Internet and generating display signals causing the web pages to be displayed on television screens. Sony® sells the TV set NSX-40GT1 with Google TV® built in; this TV set comprises widgets and a complete web browser (Crome®) which allows browsing the web while watching TV programs.

The increased number of features of TV sets and set-top-boxes has caused an increased complexity in control of the same. The user is presented with a lot of contents that are available from different sources (Internet, cable, satellite, terrestrial aerials) and once he/she has found a nice TV program from one of the different sources, he/she can have problems in finding it again in a second time.

For this reason, favorites channel lists are becoming a standard feature of TV sets and internet computing devices. TV sets and set-to-boxes allow a user to save a list of "favorite" channels, so that he/she can find them easily. Web browsers allow users to "bookmark" web pages and to store history of the web pages visited by the user. Sony's TV set NSX-40GT1 allows bookmarking visited web pages; the bookmark is then stored in the list of favorites that therefore include links to favorite web pages and to favorite TV channels.

Bookmarking a web page is usually obtained by simply storing a URL which is then used to retrieve the web page.

Some prior art documents have faced several problems of bookmarking and presented bookmarks with improved features.

EP 2224353 faces the problem of retrieving particular data in long and/or verbose web pages and discloses a method, apparatus and system for producing pinned bookmarks.

US 2005/0193053 faces the problem of readjusting text, graphics and other options for each viewed web page. A system process a request to fetch a web page based on a stored URL and on stored format preferences for the fetched web page, so as to generate display signals causing the web page to be displayed according to the user's preferences.

In both cases, EP 2224353 and US 2005/0193053 disclose methods and systems which require saving of user preferences, like a position of a text indicated as favorite by the user or the text display size.

None of these prior art documents have faced the problem that some web pages display a content which depends on several parameters (e.g. cookies) that can change over time. A user having bookmarked a web page, could be presented with different contents when he visits the web page later on.

Notwithstanding several techniques are known for bookmarking web pages or managing favorite channels, these multimedia devices are still of great complexity and present a lot of menus that can be operated by the user to display EPG (Electronic Program Guide), to set TV settings (like color, contrast, display format), to install channels and devices, and so on...

### OBJECTS AND SUMMARY OF THE INVENTION

It is an object of the present invention to reduce complexity of operation of a computing device, and in particular of a multimedia device like a TV set or a set-top-box.

It is an object of the present invention, to solve the problem of presenting a user with the same content displayed when he/she bookmarked a particular webpage or, more in general, he/ she indicated as favorite an application in a particular state.

In one aspect, the present invention is directed to a method for managing applications in a computing device. A user saving command for saving information on the state of a running software application is received and, in reply, the running software application is queried in order to receive data necessary to resume the software application in said current state. Data provided by the software application in reply to the query are stored in a computer readable medium so as to keep information on said current state while the software application changes state. When a user recall command for executing the application is received, the stored data are provided to the software application, so that the software application reaches said current state and resume operation.

This solution has the advantage that an application manager implementing this method can execute any application in user favourite state without having complete knowledge of the software application. In fact, application manager just need to provide the software application with data received from the software application itself.

In one aspect, the method provides for querying the software application to provide a data format that has to be used to provide the stored data to the software application. Upon reception of the user recall command, the software application is executed by providing the stored data in the received data format to the software application.

This solution has the advantage that it is not necessary to have a standardized communication protocol for allowing a correct communication between application manager and different software applications.

In another aspect, the method comprises the steps of providing the user with a plurality of saving options, receiving a user selection of a saving option and storing the received data according to the received user selection.

This solution has the advantage that only a reduced amount of data is stored.

In another aspect of the invention, wherein the saving command is a dynamic saving command, the method provides for updating the stored data in reply to reception of the user recall command and to provide said updated data to the software application.

This solution has the advantage of a more flexible use of the computing device.

In one aspect, the user is provided with a plurality of saving options. Based on the user selection, upon reception of the user saving command, the software application is queried in order to receive selected data necessary to resume the software application in said current state.

In one aspect, the user is provided with a plurality of saving options. Based on the user selection, the data received from the software application are stored.

In one aspect the software application generates data suitable to be displayed and the method provides for displaying data generated by the software application after having provided the stored data to the software application.

In one aspect, data received from the software application comprise data relative to operative options being active in said current state.

In one aspect the computing device is a television receiver and the software application is an electronic program guide application providing scheduling information on television programs. This solution provides easiness of use of devices like TV set and set-top-boxes.

In one aspect, the software application is a web browser and data received from the software application in reply to the user saving command comprise an URL and at least a cookie. This solution provides an improved bookmarking of web pages.

In one aspect the software application may keep track of its starting condition and/or of data entered by the user, and/ or of data received from a remote device, so as to be able to retrieve a state reached as consequence of the user's inputs and selections.

In one aspect, the invention is directed to a computing device, in particular a TV set or a set-top-box, implementing the above methods.

In one aspect, the invention is also directed to a computer program comprising program code means for performing all the steps of the method as above mentioned and as claimed.

In one aspect, the invention is also directed to a computer readable medium storing computer-executable instructions performing all the steps of the method as above mentioned and as claimed.

Notwithstanding the invention is described and illustrated herein with reference to a limited number of embodiments, it is understood that various combinations of the elements, decoders, units, computers, computer server, circuital and logic blocks, other than those specifically illustrated, are contemplated and are within the scope of the present invention which is defined by the attached claims forming integral part of the present description.

### BRIEF DESCRIPTION OF THE DRAWINGS

The invention will be presented here below with reference to non limiting examples, provided for explicative and non limitative reasons in the annexed drawings. These drawings illustrate different aspects and embodiments of the present invention and, where appropriate, reference numerals illustrating like structures, components, materials and/or elements in different figures are indicated by similar reference numbers.
Figure 1 illustrates a system comprising a computing device according to a first exemplary embodiment of the invention.
Figure 2 illustrates a flowchart of a method for executing software applications in a computing device according to a first exemplary embodiment of the invention.
Figure 3 illustrates a flowchart of a method for executing software applications in a computing device according to a second exemplary embodiment of the invention.

### DETAILED DESCRIPTION OF THE PREFERRED EMBODIMENTS

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all modifications, alternative constructions, and equivalents falling within the spirit and scope of the invention as defined in the claims.

In the following description and in the figures, like elements are identified with like reference numerals. The use of "e.g.," "etc," and "or" indicates non-exclusive alternatives without limitation unless otherwise noted. The use of "including" means "including, but not limited to," unless otherwise noted.

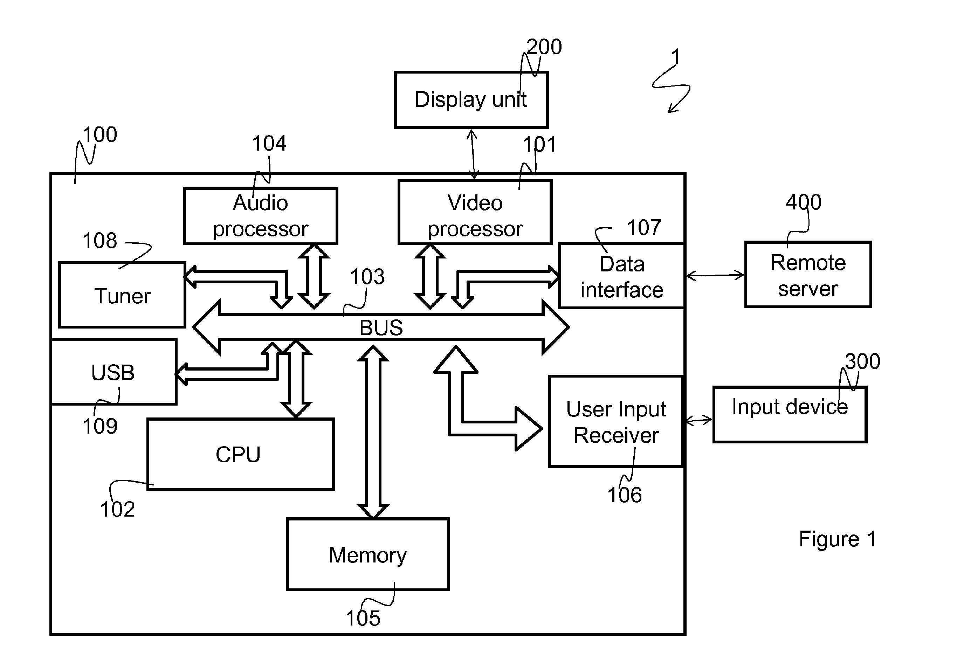

Figure 1 illustrates a video system 1 comprising a computing device 100 generating video signals for a display unit 200, and an input device 300 operable by a user to control the computing device 100.

In one embodiment, computing device 100 is a video unit for displaying video signals, in particular in can be integrated in a TV set or it can be a set-top-box or a DVD or Blu-Disk reader or any other device suitable to provide video signals to a display unit.

In one embodiment, display unit 200 is a TV set provided of its own tuner to allow a user to tune on desired TV channels received via an antenna or a cable connection. Alternatively, display unit 200 is a monitor not provided of tuning means, but suitable to process and display video signals received by the computing device 100. In order to provide the display unit 200 with video signals, computing device 100 is provided with a video processor 101 which receives video signals from a central processing unit (CPU) 102 via a communication bus 103, e.g. an Ic2 bus.

In the embodiment of figure 1, computing device also comprises an audio processor 104 which processes audio data received from CPU 102 and outputs audio signals than can be played by external loudspeakers (not shown in figure 1), integrated, connected or separated from display unit 200.

Audio processor and video processor can be integrated in one graphic card processing audio and video and outputting either separate video and audio signals, or an HDMI (High Definition Multimedia Interface) signal comprising audio and video.

CPU 102 executes code portions stored in memory unit 105. Memory unit is preferably a hard disk or other mass memory. The Memory unit 105 can also comprise volatile memory such as RAM.

In particular, CPU 102 runs an Operating System managing hardware resources of the computing device 100, and providing services for efficient execution of a plurality of software applications, i.e. applications designed to help the user to perform different tasks.

In the preferred embodiment, memory unit 105 stores code portions that, once executed by CPU 102 implement the graphic user interface (GUI) of computing device 100, i.e. a software application that allows human-machine interaction between user and computing device.

As an example, when a user provides an input to computing device 100 via input device 300 (e.g. a remote control or a keyboard), a receiver 106 receives the user inputs and stores relative input data in memory 105 via communication bus 103. CPU will then process the stored input data according to the GUI application and will control hardware components (e.g. a tuner) or provides video processor 101 with corresponding video data to be displayed.

In the preferred embodiment, in addition to the GUI, CPU 102 runs a plurality of software applications stored in memory 105. In particular computing device is provided with a web browser application, an EPG application and an application manager.

The web browser application retrieves data from an external computer server 400 via a data interface 107 that can be an Ethernet card, an ADSL (Asymmetric Digital Subscriber Line) modem, a Wi-Fi modem (i.e. a device operating according to IEEE 802.11 standards) or any other device suitable to connect to the Internet, to retrieve and process web pages.

The EPG application retrieves data related to TV programs and organizes them in grids or menus displaying scheduling information, e.g. for current and upcoming programming. In one embodiment, data relative to TV programs are retrieved over the Internet via data interface 107. In another embodiment, data relative to TV programs are received as metadata of a broadcast transport stream transporting program streams, e.g. via tuner 108 of computing device 100. In a further embodiment, EPG application also retrieves data relative to video contents available via further video sources, like Blu-Ray or DVD readers, video servers available over the Internet or connected to the computing device via a local area network or a direct connection (e.g. via a USB interface 109), etc...

An application manager is configured and used to save information on a particular application in a particular state.

A state of an application is to be understood as a particular configuration of information in a software application which is the result of particular input parameters received.

In the preferred embodiment, when a user is watching to a web page displayed on the display device 200 or is browsing a result of a search query in the EPG, he is viewing data corresponding to a current state of a software application.

More in detail, with reference to a web browser, a user accesses a web page by inputting an URL (Uniform Resource Locator). The web browser application receives the input URL, individuates a corresponding web server (e.g. via a Domain Name Server, DNS) and retrieves the requested web page. The web browser processes the HTML (HyperText Markup Language) or XML (extensible Markup Language) code of the web page and displays it.

As it is known, the HTML code of a web page can contain reference to remote data/objects stored in a remote location (e.g. images and files in general) or to local data (e.g. cookies, passwords, session identifiers, etc...), stored in a local memory easily accessible by the web browser.

A state of a web browser application therefore depends on a set of data that include the URL but is not necessary limited to it.

In the same way, a user can drill the EPG by implementing several combined searches, e.g. searching for action movies directed in the'60s.

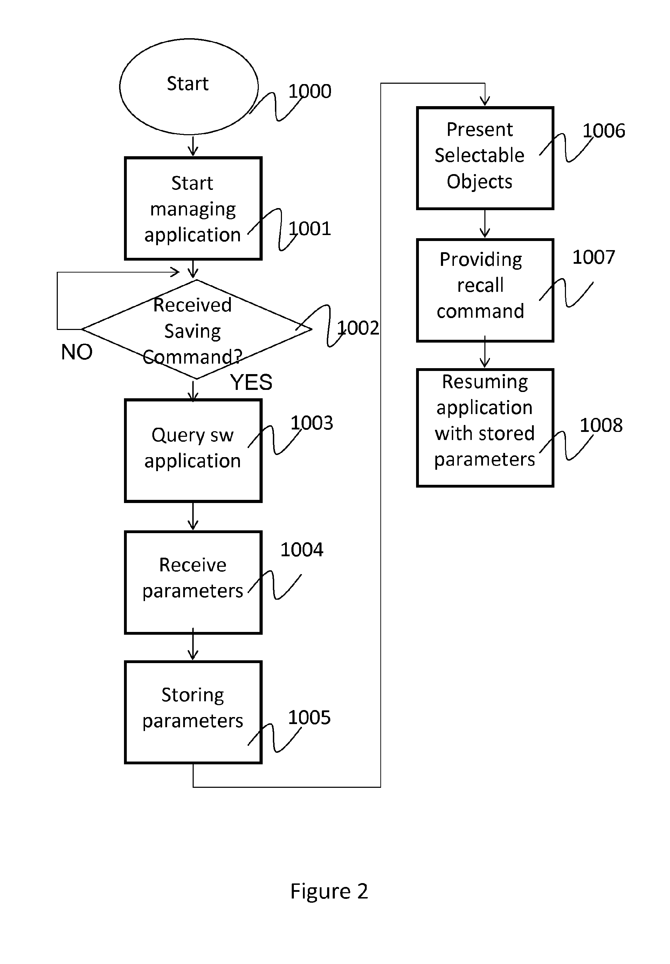

As shown in figure 2, computing device 100 is configured to implement a method for saving states of a software application.

The method starts at step 1000, when a user operates the input device 300 causing execution of one of the software applications stored in memory 105, as an example one of the above mentioned EPG or web browser applications. In the following the method is described with reference to a web browser application.

As the web browser application is started, CPU also starts (step 1001) an application manager (that can be a subroutine of the GUI or an independent application). The application manager can also be started by the operating system of the device and operate in the background as a service.

While the user uses the web browser and surfs the web moving from one web page to another, application manager waits (step 1002) for a user saving command, e.g. to bookmark a web page.

Differently from a standard bookmarking of a web page (wherein the web browser stores the URL of the web page), when a saving command is received, the application manager queries (step 1003) the web browser to receive a set of data necessary to retrieve the web browser application in the same state as the one assumed by the web browser at the time the saving command was issued. In other words, the application manager queries the web browser to know which parameters/inputs shall be provided to the web browser in order to recall the same application in the same state, e.g. to display the same web page.

For this purpose, in one embodiment the web browser keeps track of its starting condition, of data and selections entered by the user, and of data and parameters received from a remote web server (e.g. session ID), so as to be able to retrieve a state reached as consequence of the user's inputs and selections.

In one embodiment, data state received from the software application comprise values of options which were active in the software application when the saving contact was received. As an example, if the software application is a web browser providing several viewing options (like displaying of a history bar), then the web browser will provide the values to be passed for the variables associated to the viewing options.

After these data have been received, the method provides for storing (1005) these data in a memory area, e.g. in memory 105. Data may comprise data and/or parameters on application's processes context and/or context of application's threads executed by the processor and/ or memory sections used by the application and/ or state of operating system drivers influencing the application or being influenced by the application.

At this point, information necessary to execute and resume the web browser in the state indicated by the user has been retrieved and stored.

The method then provides for allowing a user to execute the web browser so that it reaches the same state that was assumed by the web browser when the user issued the saving command to bookmark a web page.

In one embodiment, when the user operates the GUI, he is provided with a plurality of menus, one of which is a favourite menu wherein the user is presented (step 1006) with objects (e.g. icons, cells, names, logos etc...) which can be selected by the user operating the input device 300.

By selecting one of these objects, the user provides (step 1007) a recall command that is received by the CPU.

CPU 102 then (step 1008) executes a software application associated to the object selected and provides to the software application data stored in response to a user saving command. With reference to the above example of bookmarking a web page, CPU 102 executes the web browser application and provides to the same the set of data received at step 1004. In this way the web browser reaches the same state assumed when the user issued the saving command: the same web page is displayed with the same active web browser options.

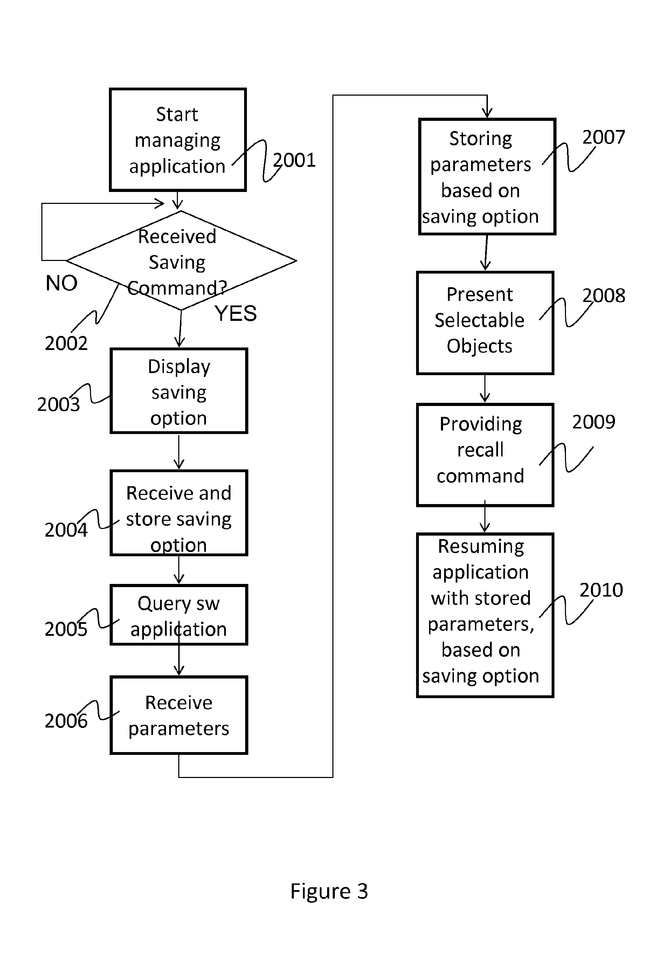

In an alternative embodiment disclosed with reference to figure 3, the method provides for executing an application manager (step 2001) which is responsible for saving favourite application states of a plurality of managed application executable by CPU 102.

Application manager is executed either before or after any of the managed software application is executed.

In the same way as in the embodiment of figure 2, the application manager waits (step 2002) for a user saving command intended to command the application manager to save a favourite state of an application, in particular a state providing information that is displayed to the user when he issues the saving command.

After having received the saving command from the user, application manager provides the user with the possibility to select among a plurality of different saving options.

In the embodiment of figure 3, which is again explained with non limitative example to a web browser application, the application manager cooperates with the GUI to display (step 2003) to the user a message for selecting between deep dynamic, dynamic and static saving mode.

The user selection is then received and stored at step 2004 and the method proceeds further with the application manager querying (step 2005) the web browser to receive a set of data that are necessary to let it reach the user indicated state.

In one embodiment, the application manager has knowledge of the set of data /parameters that are necessary to the application to reach a predetermined state, e.g. because of a past management of that application. In this embodiment, application manager, while querying the software application, informs the software application of the type of data that shall be passed to the application manager. This solution is preferred for saving options wherein not all data necessary to reproduce the same application context are saved, like in the case of deep dynamic saving option disclosed here below.

Application manager then receives from the web browser (step 2006) a set of data necessary to let the web browser reach the state where it was when the user issued the saving command. To this purpose, web browser keeps track of all data that are necessary to reach a state reached in response to starting conditions and user inputs. Application manager stores (step 2007) all or part of the received data based on the user saving mode selection and on the type of query. As an example, if all data are necessary, application manager shall request all data to be provided by the software application. If not all data are to be saved, application manager can either request all data and then store only some of them, or it can request only a reduced number of selected data and then store all the received data.

If the user has selected the static saving mode, the application manager stores all data necessary to resume the application in the state where it was when the user issued the user saving command.

If the user selects the dynamic saving mode, the application manager, in addition to save all data necessary to resume the application in the state where it was when the user issued the user saving command, stores a dynamic saving mode value which is used in a second time to resume the web browser application in that state.

If the user selects a deep dynamic saving mode, the application manager requests and stores only local parameters, i.e. parameters that are usually stored at local level from the web browser, like cookies, URLs, etc... This last solution allows reducing the amount of data to be saved and the relative memory occupancy in the computing device.

Once the application manager has received and stored data from the web browser, the user is provided with the possibility to resume the web browser in the state visited by the user, e.g. the web browser is resumed to see a particular web page with particular options being selected at web browser level.

In the embodiment of figure 3, application manager stores both data received from the web browser, and information relative to the selected saving mode.

The user is then free to continue using the web browser changing operative options (like viewing options, password saving options, etc...) and/or surfing the web until he/she decide to close the web browser.

When the user wants to visit the same web page bookmarked, the user access a favourite menu available via the GUI; in this menu a plurality of selectable objects (icons, logos etc...) is presented (step 2008) to the user.

By selecting one of this objects (step 2009), the user provides a recall command to the application manager which (step 2010) detects the type of selected saving mode by inspecting the data associated to the selected icon and execute the web browser application providing the same with the data received at step 2006.

In case the user has selected the static saving mode or the dynamic saving mode, the web browser has all the data necessary to display a complete web page with the same display options and with the web browser exactly in the same state of when the user had bookmarked the web page.

If the user has selected the static saving mode, application manager ends its work after resuming the web browser application in the saved state.

If the user has selected the dynamic or deep dynamic saving mode, in one preferred embodiment application manager uses a stored URL to query a web server and retrieve updated data to be provided to the web browser. The web browser will then be suspended in the saved state for a period of few seconds waiting for updating of the remote parameters that shall be passed to the web browser. In an alternative embodiment, if the user has selected the dynamic or deep dynamic saving mode, application manager will provide web browser with information necessary to understand which parameters shall be updated, so that the web browser can update only these parameters.

Difference between dynamic and deep dynamic saving mode only resides in the fact that when the user resumes an application saved in deep saving mode, the user is not immediately provided with complete information and shall need updating of the updatable data, in particular he/she shall wait for recovery of the remote parameters. As an example, if the user is resuming a web browser, he will not be displayed with a complete web page.

The purpose of the Abstract is to enable the public, and especially the scientists, engineers, and practitioners in the art who are not familiar with patent or legal terms or phraseology, to determine quickly from a cursory inspection, the nature and essence of the technical disclosure of the application. The Abstract is neither intended to define the invention of the application, which is measured by the claims, nor is it intended to be limiting as to the scope of the invention in any way.

Still other features and advantages of the claimed invention will become readily apparent to those skilled in this art from the above detailed description describing preferred embodiments of the invention, simply by way of illustration of the best mode contemplated by carrying out the invention. As it can readily be realized, the invention is capable of modification in various obvious respects all without departing from the invention. Accordingly, the drawings and description of the preferred embodiments are to be regarded as illustrative in nature, and not as restrictive in nature and various changes may be made without departing from the scope of the invention as defined by the following claims.

As an example, the method has been described with reference to a web browser, yet it can be used to manage a plurality of applications.

As an example, a user may desire to save a link to a particular menu of the GUI, e.g. a channel installation menu. In this case, after having reached the desired menu, the user provides a saving command (e.g. by pressing a coloured button on a remote control) and the application manager queries the GUI application to receive a set of data which are necessary to the GUI application to reach exactly that state, with the same GUI options and with the same content displayed. The GUI then provides the application manager with data necessary to reach the current state. Application manager stores the received data and collaborates with the GUI to generate an object (e.g. an icon) that can be selected by the user in a favourite menu of the GUI. By selecting this object, the GUI reaches the state corresponding to the display of the channel installation menu with the same control options active at the time the user issued the saving command.

As it can be derived from the above example, although in the preferred embodiment the favourite objects are used to resume an application in a predetermined state, more in general the invention can be used to cause an application to reach a predetermined state which is favourite by the user. Indeed, the application that has to reach the favourite state can be already running, and the user can force it to reach a favourite state by operating one of the favourite objects created by the application manager. While in the above description, the CPU 102 executes the steps of the method for executing software applications by means of code portions stored in a local memory, it can be easily recognized, by one skilled in the art, that the aforementioned system and method may be performed and/or controlled by one or more computer programs. Such computer programs are typically executed by utilizing the computing resources of a processing unit which can be embedded within various computing devices, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

Moreover, while in the above embodiments application manager and software application are running in the same computing device, it is clear that the method for managing software applications according to the invention can be implemented in a computing system wherein application manager and software application are run on different computing devices. As an example, the method of figure 2 or 3 can be implemented by a set-top-box comprising an application manager that queries a web browser running on an external device (e.g. a TV set or a smart phone) connected to the set-top-box via an HDMI interface.

More in general, a person skilled in the art, will readily understand that while the invention has been described with a preferred embodiment of a computing device comprising particular functional blocs, the invention can be implemented in a more distributed environment, wherein a plurality of devices comprise one or more of the blocks and execute one or more of the functions above described with reference to the video system 1 and/or to the computing device 100.

## Claims

1. A method for managing applications in a computing device, comprising the steps of
• receiving a user saving command for saving information on the current state of a running software application,
• upon reception of the saving command, querying the running software application in order to receive data necessary to resume the software application in said current state,
• receiving data provided by the software application in response to said query,
• storing the received data in a computer readable medium to keep information on the current state while the software application changes state,
• receiving a user recall command for executing the application, and
• upon reception of a user recall command, providing the stored data to the software application, so that the software application reaches said current state and resumes operation.

2. The method of claim 1, further comprising the steps of
querying the software application to provide a data format that has to be used to provide the stored data to the software application,
receiving a data format from the software application,
upon reception of the user recall command, executing the software application by providing the stored data in the received data format to the software application.

3. The method of claim 1 or 2, further comprising the steps of
providing the user with a plurality of saving options,
receiving a user selection of a saving option,
storing the received data according to the received user selection.

4. The method according to claim 1 or 2 or 3, wherein said saving command is a dynamic saving command, and wherein the method provides for updating the stored data in reply to reception of the user recall command and to provide said updated data to the software application.

5. The method according to any of the previous claims, further comprising the steps of
providing the user with a plurality of saving options,
receiving a user selection of a saving option,
upon reception of the user saving command, querying the software application in order to received selected data necessary to resume the software application in said current state, said selected data depending on the received user selection.

6. The method according to any of claims 1 to 4, further comprising the steps of providing the user with a plurality of saving options,
receiving a user selection of a saving option,
whereby the data received from the software application are stored according to the user selection.

7. The method according to any of claims 1 to 6, wherein said software application generates data suitable to be displayed and wherein the method provides for displaying data generated by the software application after having provided the stored data to the software application.

8. The method according to any of claims 1 to 7, wherein said data received from the software application comprise data relative to operative options being active in said current state.

9. The method according to any of claims 1 to 8, wherein said computing device is a television receiver and wherein said software application is an electronic program guide application providing scheduling information on television programs.

10. The method according to any of claims 1 to 8, wherein said software application is a web browser and wherein said data comprise an URL and at least a cookie.

11. The method according to any of the previous claims, wherein said software application keeps track of its starting condition and/or of data entered by the user, and/or of data received from a remote device, so as to be able to retrieve a state reached as consequence of the user's inputs and selections

12. Computing device comprising
a memory unit comprising code portions of a software application and code portions of an application manager,
a receiver to receive user commands,
a processor suitable to execute code portions stored in said memory unit,
the computing device being **characterized in that** said code portions are suitable to performing all the steps of the method according to any of claims 1-11 when said code portions are run on the computing device.

13. A computer program comprising program code means for performing all the steps of the method according to any of claims 1-10 when said program is run on a computer.

14. A computer readable medium storing computer-executable instructions performing all the steps of the method according to any of claims 1-10 when executed on a computer.

## Amended claims

### Amended claims in accordance with Rule 137(2) EPC.

**1.** A method for managing applications in a computing device of a multimedia device, comprising the steps of
• receiving a user saving command for saving information on the current state of a running software application of an electronic program guide application providing scheduling information on television programs or of a web browser,
• upon reception of the saving command, querying the running software application in order to receive data necessary to resume the software application in said current state,
• receiving data provided by the software application in response to said query,
• storing the received data in a computer readable medium to keep information on the current state while the software application changes state,
• receiving a user recall command for executing the application, and
• upon reception of a user recall command, providing the stored data to the software application, so that the software application reaches said current state and resumes operation of said scheduling information on television programs or of said web browser.

**2.** The method of claim 1, further comprising the steps of
querying the software application to provide a data format that has to be used to provide the stored data to the software application,
receiving a data format from the software application,
upon reception of the user recall command, executing the software application by providing the stored data in the received data format to the software application.

**3.** The method of claim 1 or 2, further comprising the steps of
providing the user with a plurality of saving options,
receiving a user selection of a saving option,
storing the received data according to the received user selection.

**4.** The method according to claim 1 or 2 or 3, wherein said saving command is a dynamic saving command, and wherein the method provides for updating the stored data in reply to reception of the user recall command and to provide said updated data to the software application.

**5.** The method according to any of the previous claims, further comprising the steps of
providing the user with a plurality of saving options,
receiving a user selection of a saving option,
upon reception of the user saving command, querying the software application in order to received selected data necessary to resume the software application in said current state, said selected data depending on the received user selection.

**6.** The method according to any of claims 1 to 4, further comprising the steps of providing the user with a plurality of saving options,
receiving a user selection of a saving option,
whereby the data received from the software application are stored according to the user selection.

**7.** The method according to any of claims 1 to 6, wherein said software application generates data suitable to be displayed and wherein the method provides for displaying data generated by the software application after having provided the stored data to the software application.

**8.** The method according to any of claims 1 to 7, wherein said data received from the software application comprise data relative to operative options being active in said current state.

**9.** The method according to any of the previous claims, wherein said software application keeps track of its starting condition and/or of data entered by the user, and/or of data received from a remote device, so as to be able to retrieve a state reached as consequence of the user's inputs and selections

**10.** Computing device comprising
a memory unit comprising code portions of a software application and code portions of an application manager,
a receiver to receive user commands,
a processor suitable to execute code portions stored in said memory unit,
the computing device being **characterized in that** said code portions are suitable to performing all the steps of the method according to any of claims 1-9 when said code portions are run on the computing device.

**11.** A computer program comprising program code means for performing all the steps of the method according to any of claims 1-9 when said program is run on a computer.

**12.** A computer readable medium storing computer-executable instructions performing all the steps of the method according to any of claims 1-9 when executed on a computer.
